# DEMANDE DE BREVET EUROPEEN

(11) **EP 3 061 647 A1**
(43) Date de publication de la demande: **31.08.2016**
(21) Numéro de dépôt: 16156812.6
(22) Date de dépôt: 23.02.2016
(51) Int. Cl.: B60N 2/58

(54) **COMPOSANT DE SIÈGE DE VÉHICULE AUTOMOBILE**

(30) Priorité: 24.02.2015 FR 1551561
(71) Demandeur: Cera TSC, 75008 Paris (FR)
(72) Inventeur: BLAY, Bernard, 60280 Bienville (FR); NEVES, José, 4510-671 Fânzeres (PT)
(74) Mandataire: Sayettat, Julien Christian

(57) **Abrégé**

L'invention concerne un composant (1) comprenant un coussin (2), ledit coussin comprenant un corps (3) de rembourrage - notamment en mousse de polyuréthanne élastiquement compressible - et une coiffe (4) de revêtement chaussée sur ledit corps, ladite coiffe comprenant deux empiècements (5a,5b) de matériau de revêtement assemblés bord à bord par une couture (6) définissant un talon de couture (7) tourné vers l'intérieur de ladite coiffe, ledit talon étant formé de deux bandes (8a,8b) respectives de chacun desdits empiècements, chacune desdites bandes étant rabattue contre la face d'envers (9a,9b) de l'empiècement (5a,5b) dont elle est issue et fixée sans couture additionnelle contre ladite face.

## Description

L'invention concerne un composant de siège de véhicule automobile et un procédé de réalisation d'une coiffe d'un tel composant.

Il est connu de réaliser un composant de siège de véhicule automobile, ledit composant comprenant un coussin, ledit coussin comprenant un corps de rembourrage - notamment en mousse de polyuréthanne élastiquement compressible - et une coiffe de revêtement chaussée sur ledit corps, ladite coiffe comprenant deux empiècements de matériau de revêtement assemblés bord à bord par une couture définissant un talon de couture tourné vers l'intérieur de ladite coiffe, ledit talon étant formé de deux bandes respectives de chacun desdits empiècement.

Le talon de couture ainsi obtenu définit une saillie qui se positionne généralement sensiblement perpendiculairement à la surface du corps de rembourrage qui lui fait face.

Et la présence d'une telle saillie complexifie le chaussage du corps de rembourrage par la coiffe.

En effet, l'opérateur de fabrication est obligé, pour avoir un bon positionnement de la zone de jonction des empiècements par rapport au corps de rembourrage, de réaliser un « pétrissage » du coussin exigeant le déploiement d'une grande force manuelle qui entraine une fatigue accrue et des risques de lésions de type tendinite.

L'invention a pour but de pallier ces inconvénients.

A cet effet, et selon un premier aspect, l'invention propose un composant de siège de véhicule automobile, ledit composant comprenant un coussin, ledit coussin comprenant un corps de rembourrage - notamment en mousse de polyuréthanne élastiquement compressible - et une coiffe de revêtement chaussée sur ledit corps, ladite coiffe comprenant deux empiècements de matériau de revêtement assemblés bord à bord par une couture définissant un talon de couture tourné vers l'intérieur de ladite coiffe, ledit talon étant formé de deux bandes respectives de chacun desdits empiècements, chacune desdites bandes étant rabattue contre la face d'envers de l'empiècement dont elle est issue et fixée sans couture additionnelle contre ladite face.

Avec l'agencement proposé, le talon de couture ne forme plus une saillie généralement perpendiculaire à la surface du corps de rembourrage qui lui fait face.

Par ailleurs, le fait de réaliser la fixation des bandes sans couture additionnelle permet de disposer d'un coussin visuellement exempt de couture en zone de jonction des empiècements.

L'agencement proposé permet une simplification du chaussage du corps de rembourrage par la coiffe, l'opérateur n'étant plus obligé de réaliser un pétrissage du coussin, ce qui minimise sa fatigue et écarte le risque de lésions de type tendinite.

Selon un deuxième aspect, l'invention propose un procédé de réalisation d'une coiffe d'un tel composant

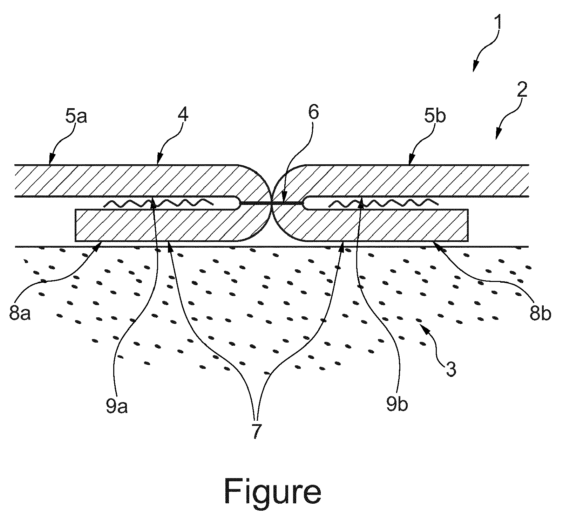

D'autres particularités et avantages de l'invention apparaîtront dans la description qui suit, faite en référence à la figure jointe qui est une représentation schématique partielle en coupe d'un composant selon l'invention.

En référence à la figure, on décrit un composant 1 de siège de véhicule automobile - notamment sous forme d'appui-tête ou de matelassure de dossier ou d'assise -, ledit composant comprenant un coussin 2, ledit coussin comprenant un corps 3 de rembourrage - notamment en mousse de polyuréthanne élastiquement compressible - et une coiffe 4 de revêtement chaussée sur dudit corps, ladite coiffe comprenant deux empiècements 5a,5b de matériau de revêtement assemblés bord à bord par une couture 6 définissant un talon de couture 7 tourné vers l'intérieur de ladite coiffe, ledit talon étant formé de deux bandes 8a,8b respectives de chacun desdits empiècements, chacune desdites bandes étant rabattue contre la face d'envers 9a,9b de l'empiècement 5a,5b dont elle est issue et fixée sans couture additionnelle contre ladite face.

De façon non représentée, le matériau de revêtement comprend une couche d'aspect, ladite couche étant notamment en tissu, en textile enduit de plastique ou en cuir.

De façon non représentée, la couche d'aspect peut être pourvue d'une couche d'envers, notamment en mousse flexible.

Selon une réalisation, les bandes 8a,8b sont fixées par collage, notamment au moyen de colle ou de papier adhésif double face.

Selon une autre réalisation, les bandes 8a,8b sont fixées par soudage.

On décrit à présent un procédé de réalisation d'une telle coiffe 4, ledit procédé comprenant, consécutivement à l'opération de couture bord à bord des deux empiècements 5a,5b, une étape de rabattement de chacune des bandes 8a,8b contre la face d'envers 9a,9b de l'empiècement 5a,5b dont elle est issue et une fixation de chacune desdites bandes sans couture additionnelle contre ladite face, les bandes 8a,8b étant fixées en continu à mesure de la réalisation de la couture 6.

## Revendications

1. Composant (1) de siège de véhicule automobile, ledit composant comprenant un coussin (2), ledit coussin comprenant un corps (3) de rembourrage - notamment en mousse de polyuréthanne élastiquement compressible - et une coiffe (4) de revêtement chaussée sur ledit corps, ladite coiffe comprenant deux empiècements (5a,5b) de matériau de revêtement assemblés bord à bord par une couture (6) définissant un talon de couture (7) tourné vers l'intérieur de ladite coiffe, ledit talon étant formé de deux bandes (8a,8b) respectives de chacun desdits empiècements, ledit composant étant **caractérisé en ce que** chacune desdites bandes est rabattue contre la face d'envers (9a,9b) de l'empiècement (5a,5b) dont elle est issue et fixée sans couture additionnelle contre ladite face.

2. Composant selon la revendication 1, **caractérisé en ce que** les bandes (8a,8b) sont fixées par collage, notamment par de la colle ou par du papier adhésif double face.

3. Composant selon la revendication 1, **caractérisé en ce que** les bandes (8a,8b) sont fixées par soudage.

4. Procédé de réalisation d'une coiffe (4) d'un composant selon l'une quelconque des revendications 1 à 3, ledit procédé comprenant, consécutivement à l'opération de couture bord à bord des deux empiècements (5a,5b), une étape de rabattement de chacune des bandes (8a,8b) contre la face d'envers (9a,9b) de l'empiècement (5a,5b) dont elle est issue et une fixation de chacune desdites bandes sans couture additionnelle contre ladite face, ledit procédé étant **caractérisé en ce que** les bandes (8a,8b) sont fixées en continu à mesure de la réalisation de la couture (6).
